# EUROPEAN PATENT SPECIFICATION

(11) **EP 1 950 451 B1**
(45) Date of publication and mention of the grant of the patent: **02.03.2011**
(21) Application number: 06823426.9
(22) Date of filing: 15.11.2006
(51) Int. Cl.: F16F 13/18, F16F 13/06, F16F 13/08, F16F 15/023, F16F 15/08

(54) **LIQUID SEALED MOUNT AND METHOD OF ASSEMBLING THE SAME**
FLÜSSIGKEITSABGEDICHTETE HALTERUNG UND MONTAGEVERFAHREN DAFÜR
SUPPORT A LIQUIDE CONFINE ET SON PROCEDE D' ASSEMBLAGE

(30) Priority: 15.11.2005 JP 2005330439
(43) Date of publication of application: 30.07.2008
(73) Proprietor: FUKOKU Co., Ltd., Saitama-shi, Saitama 330-6024 (JP)
(72) Inventor: KUZUKAWA, Mitsuo, Saitama-Shi, Saitama 3306024 (JP)
(74) Representative: de Kernier, Gabriel
(86) International application number: PCT/JP2006/322778
(87) International publication number: WO 2007/058222

(56) References cited:
- DE-A1- 4 139 048
- JP-A- 07 127 683
- JP-A- 09 042 369
- JP-A- 10 026 172
- JP-A- 2003 322 198
- JP-A- 2003 343 636
- JP-A- 2004 076 786
- JP-A- 2005 048 917
- JP-A- 2005 170 212
- JP-U- 06 028 378
- JP-U- 06 062 242
- US-A- 5 127 636

## Description

### TECHNICAL FIELD

The present invention relates to a liquid sealed mount for vibration insulation, which is used for industrial machines such as construction machines; large tracks; motor vehicles; and the like, and more particularly to a liquid sealed mount suitable for use between a vehicle body frame and a cab (cabin) of a power shovel and the like.

### BACKGROUND ART

In recent years, a mount such as a rubber mount and a liquid sealed mount has been provided between the cab in which a driver rides and the vehicle body frame in a construction machine such as a power shovel and a wheel loader. Comfortable interior comfort and operability for the driver are obtained by a vibration absorbing function and a vibration damping function of the mount. In order to secure such comfort for the driver, conditions desired for the mount nowadays are to improve isolation of vibration from a side of the vehicle body frame, that is, to enhance flexibility of the mount or be able to damp vibration at an early stage even though the cab is vibrated.

However, in such a construction machine as described above, for example, a center of its gravity is high because the cab and an engine of the machine that are heavy are installed above the vehicle body frame having an endless track such as a crawler as a vehicle; and the machine is often used on uneven terrain. Therefore, the machine sometimes topples over when an error in operation or an accident occurs. At this time, an excessive load is applied to the mount, and a crack occurs in an elastic body constructing the mount, which results in the fear that the mount does not properly function.

Accordingly, to avoid events as described above, it is considered that strength of the mount itself is improved by making larger or thicker respective components of the mount, particularly a stud provided in a center portion of the mount and a diameter of a case that accommodates the stud and a damping unit. However, as the strength is made higher, weight of the mount becomes much heavier and the mount becomes larger, which results in an increase in costs of manufacturing and a need of a large space for installation. Thus, when the installation space is limited, the installation becomes difficult. Further, when the mount is downsized while securing the strength, the elastic body has to be made small. As a result, a problem such as a decrease in the vibration absorbing function arises.

Reference will be made in the following to four prior art doucments, i.e. :
Patent Document 1: Japanese Patent Application Laid-Open Publication No. 8-326811
Patent Document 2: Japanese Patent Application Laid-Open Publication No. 7-224883
Patent Document 3: Japanese Patent Application Laid-Open Publication No. 10-26172]

As a mount provided with a vibration absorbing function in the simplest structure, for example, a vibration insulation device disclosed in Patent Document 1, that is, a rubber mount has been known. The rubber mount has a pair of vibration insulation rubber (elastic bodies). A pair of elastic bodies are provided in a state where the elastic bodies are pre-compressed so as to sandwich a mount bracket therebetween. In the structure of the rubber mount, one of the elastic bodies is further compressed by movement of a stud (bolt) to one direction, and the other elastic body is further compressed by movement of the stud to the other direction. According to such a rubber mount as disclosed in Patent Document 1, the rubber mount is disposed so that a vibration loading direction of the engine and a pre-compression direction of the pair of the elastic bodies are set to be in the same direction. The elastic bodies are elastically deformed in the compression direction (extending direction) and the extending direction (compression direction) according to the vibration load of the engine, thereby absorbing and damping the vibration by internal damping of the rubber mount itself.

As a mount used between the vehicle body frame and the cab in the construction machine, a liquid sealed mount as disclosed in Patent Documents 2 and 3 has been known.

The liquid sealed mount disclosed in Patent Document 2 includes a stud fixed to a cab side in a construction machine, and a case fixed to a vehicle body frame side in the construction machine, wherein a damping plate is provided in an end portion of the stud so as to be immersed in viscous fluid sealed in the case. An elastic body is fixed to the stud by an adhesion means such as printing adhesion, and a cylindrical case fixed to the elastic body is fixed to the case, thereby forming the liquid sealed mount. The elastic body is deformed in a shear direction according to movement of the stud in an axial direction to absorb vibration, and the damping plate provided in the end portion of the stud moves in the viscous fluid, thereby damping vibration by viscosity resistance generated by the movement.

The liquid sealed mount disclosed in Patent Document 3 includes a stud fixed to a back surface of a side wall of a cab in a construction machine, and a high-strength case fixed to a vehicle body frame side in the construction machine, wherein a damping plate is provided to an end portion of the stud so as to be immersed in viscous fluid sealed in the case. In the liquid sealed mount disclosed in Patent Document 3, similarly to the liquid sealed mount disclosed in Patent Document 2, an elastic body is deformed in a shear direction according to movement of the stud in an axial direction to absorb vibration, and the damping plate provided to the end portion of the stud moves in viscous liquid, thereby damping the vibration by viscosity resistance generated by the movement.

As described above, according to the liquid sealed mounts disclosed in Patent Documents 2 and 3, the elastic body absorbs vibration by its deformation, and the damping plate can damp the vibration by its movement in the viscous fluid, so that they simultaneously have a vibration absorbing function and a vibration damping function. Thus, the liquid sealed mounts are more suitable than the rubber mount disclosed in Patent Document 1 in view of securing the comfort for the driver.

JP 2004-76786, which corresponds to the preamble of claim 1, discloses a vibration control mount comprising a coil spring and an elastic body supporting load by shear deformation.

### DISCLOSURE OF THE INVENTION

### PROBLEMS TO BE SOLVED BY THE INVENTION

Meanwhile, according to the rubber mount shown in Patent Document 1 described above, since only a pair of elastic bodies for absorbing vibration are provided as components, there is an advantage that a capacity of loads for compression is large, but since absorption/damping of the vibration is carried out only by internal damping of the elastic bodies, strokes sufficient for absorbing the vibration are hardly obtained and satisfactory riding comfort is hardly obtained because the vibration damping function is small. Further, when the strength is intended to be made higher in the limited space for disposing the mount, the diameter of the stud is made larger while the pair of elastic bodies have to be downsized, which results in the further reduction in the vibration absorbing function.

Also, according to the liquid sealed mount shown in Patent Document 2 described above, the vibration damping function is sufficiently obtained, but since the case formed by press working of a plate-shaped steel sheet receives the weight of the cab via the elastic body, the strength of the mount depends on the elastic body and the case that receives the load. Thus, when such an excessive load as to topple over in a twisting direction is applied to the mount, there are possibilities that the case will be deformed and the viscous fluid will leak because of occasion of cracks in the case. Moreover, since a heavy load in a shear direction is applied to the elastic body, there is a possibility that the cracks will occur in the elastic body.

Further, according to the liquid sealed mount shown in Patent Document 3 described above, as compared to the liquid sealed mount shown in Patent Document 2, the case is made thicker to make the strength of the mount higher, but since the case is composed of two portions of a thick one and a press-working one, there are problems that the number of its components is increased; the weight and costs are increased; upsizing of the mount cannot be avoided; and an application of the mount to small construction machines is difficult.

An object of the present invention is to provide a liquid sealed mount, which is provided with a vibration absorbing function and a vibration damping function and can be downsized while securing sufficient strength.

### MEANS FOR SOLVING THE PROBLEMS

The invention is defined by the technical features and method steps set forth in independent claims 1 and 8, respectively; further features are disclosed in the dependent claims.

A liquid sealed mount according to the present invention is provided between a one-side member and an other-side member, and absorbing and damping vibration inputted to at least one of the respective members, the mount comprising: a stud whose one end is attached to the one-side member; a flange member having a hole for inserting the stud, and fixed to the other-side member; a case attached to the flange member, an other end of the stud being incorporated into the case; a flexible seal member forming a housing chamber for sealing viscous fluid in the case by fixing an outer circumferential side of the seal member to an opening-end portion side of the case and fixing an inner circumferential side of the seal member to an outer circumferential surface of the stud; a damping plate fixed to an other end of the stud and disposed movably in the viscous fluid; and an elastic body incorporated between the one-side member and the flange member and supporting a load between both members.

The liquid sealed mount according to the present invention is such that the elastic body supports the load in a compression direction, and the seal member includes a stopper unit capable of abutting when the damping plate moves in a tensile direction, and supports a tensile-directional load.

The liquid sealed mount according to the present invention is such that the flange member has rigidity higher than that of the case.

The liquid sealed mount according to the present invention is such that the flange member supports a load in the compression direction via the elastic body, and supports a tensile-directional load via the seal member.

The liquid sealed mount according to the present invention is such that the flange member is part of the other-side member.

The liquid sealed mount according to the present invention is such that a second elastic body is disposed between an inner circumferential surface of the hole in the flange member and the outer circumferential surface of the stud.

The liquid sealed mount according to the present invention is such that the stud has a sleeve on its outer circumferential surface.

The liquid sealed mount according to the present invention is such that the elastic body and the seal member are pre-compressed in their assembling state.

The liquid sealed mount according to the present invention is such that the pre-compression is performed by compressing the elastic body and the seal member toward the flange member by the one-side member and the damping plate.

The liquid sealed mount according to the present invention is such that the one-side member is a bottom-wall side member of a cab in a construction machine, and the other-side member is a vehicle body frame in the construction machine.

A method of assembling a liquid sealed mount according to the present invention, wherein the mount is provided between a one-side member and an other-side member and absorbing and damping vibration inputted to at least one of the respective members, comprises: a first step of fixing an inner circumferential surface of a seal member to an outer circumferential surface of a stud by adhesion, fixing a damping plate to the stud and causing the stud to be disposed in a case so that the damping plate is immersed in viscous fluid, and fitting an outer circumferential side of the seal member into an opening-end portion side of the case to form a housing chamber in the case; and a second step of inserting the stud into a hole of a flange member fixed integrally with the other-side member and fixing the case to the flange member, and inserting a ring-shaped elastic body into the stud to place it on the flange member and fixing the stud to the one-side member.

The method of assembling the liquid sealed mount according to the present invention is such that the stud has a sleeve, to whose outer circumferential surface the seal member is fixed, and a bolt inserted into the sleeve to be fixed by the damping plate, and fixed to the one-side member.

### EFFECTS OF THE INVENTION

According to the liquid sealed mount in the present invention, the stud to which the damping plate disposed in the viscous fluid is fixed is attached to the one-side member, the case in which the viscous fluid is sealed is attached to the other-side member via the flange member, and the elastic body that supports the load between the members is provided between the one-side member and the flange member. Therefore, the other-side member receives the load between the both members via the flange member, so that no excessive load is applied to the case, whereby a leakage of the viscous fluid caused by deformation of the case or/and by occurrence of cracks in the case can be prevented. Since there is no need to make the strength of the case or/and the stud larger, reduction in weight and costs as well as downsizing can be achieved. Further, the elastic body is provided between the one-side member and the flange member, and the load between the both members is applied in the compression direction of the elastic body, so that no load in the shear direction is applied to the elastic body, whereby the occurrence of cracks can be prevented even when the excessive load is applied to the elastic body. Furthermore, the liquid sealed mount has the structure in which the vibration absorbing function due to the elastic body and the vibration damping function due to the movement of the damping plate are provided simultaneously, thereby being able to secure the sufficient damping performance.

According to the liquid sealed mount in the present invention, the elastic body supports the load in the compression direction, and the seal member includes the stopper unit capable of abutting when the damping plate moves in the paring direction, thereby supporting a tensile-directional load. Therefore, the loads in both the compression direction and the tensile direction can be supported, whereby an excessive tilt at and above a certain level of the one-side member with respect to the other-side member can be suppressed.

According to the liquid sealed mount in the present invention, the flange member has rigidity higher than that of the case, so that even when the excessive load is applied thereto, the flange member is not easily deformed.

According to the liquid sealed mount in the present invention, the flange member supports the load in the compression direction via the elastic body and supports the tensile-directional load via the seal member, so that the flange member receives the loads in the both directions, whereby no excessive load is applied to the case.

According to the liquid sealed mount in the present invention, since the flange member is part of the other-side member, the other-side member can be used as a strength member and the number of parts constituting the liquid sealed mount is decreased, whereby reduction of the weight of the liquid sealed mount and its downsizing can be achieved.

According to the liquid sealed mount in the present invention, the second elastic body is disposed between the inner circumferential surface of the hole in the flange member and the outer circumferential surface of the stud, so that the second elastic body receives the load between the both members caused by the movements in the horizontal direction and the twisting direction, and a vibration absorbing function can be added also to the movements between both members in the horizontal direction and the twisting direction.

According to the liquid sealed mount in the present invention, the stud has the sleeve on its outer circumferential surface, so that the seal member can be fixed to the sleeve in advance, whereby the assembling workability of the liquid sealed mount can be made easy.

According to the liquid sealed mount in the present invention, since the elastic body and the seal member are pre-compressed in their assembling state, high-frequency micro-vibration can be absorbed by the elastic body and the seal member which are pre-compressed. In this case, the pre-compression for the elastic body and the seal member can be performed by compressing the elastic body and the seal member toward the flange member by the one-side member and the damping plate.

According to the liquid sealed mount of the present invention, the one-side member is used as the bottom-wall side member of the cab in the construction machine, and the other-side member is used as the vehicle body frame in the construction machine, so that the liquid sealed mount can be applied to industrial machines such as construction machines, and the vehicle body frame in the industrial machines can be used as a strength member.

According to the method of assembling the liquid sealed mount in the present invention, the liquid sealed mount is assembled to the one-side member and the other-side member via: the first step of assembling the vibration damping function components constituting the liquid sealed mount; and the second step of fixing the vibration damping function components to the other-side member to assemble the vibration absorbing function components, which constitutes the liquid sealed mount, between the one-side member and the flange member.

According to the method of assembling the liquid sealed mount in the present invention, the stud has the sleeve, to whose outer circumferential surface the seal member is fixed, and the bolt inserted into the sleeve, fixed by the damping plate, and fixed to the one-side member, so that by the seal member being fixed to the sleeve in advance, the assembling workability of the liquid sealed mount can be made easy.

### BRIEF DESCRIPTION OF THE DRAWINGS

FIG. 1 is a sectional view of a liquid sealed mount according to an embodiment of the present invention in a state where the liquid sealed mount is attached to a vibrated object;
FIG. 2 is view showing a case of the liquid sealed mount viewed from face A-A in FIG. 1;
FIG. 3 is an exploded sectional view shown by disassembling components of the liquid sealed mount in FIG. 1;
FIG. 4 is a sectional view shown by separating a ring-shaped elastic body and a vibration damping body, which constitute the liquid sealed mount in FIG. 1;
FIG. 5 is a sectional view of a vibration damping body in another embodiment; and
FIG. 6 is a sectional view of a single body of a seal member in the vibration damping body shown in FIG. 5.

### BEST MOCE FCR CARRYING OUT THE INVENTION

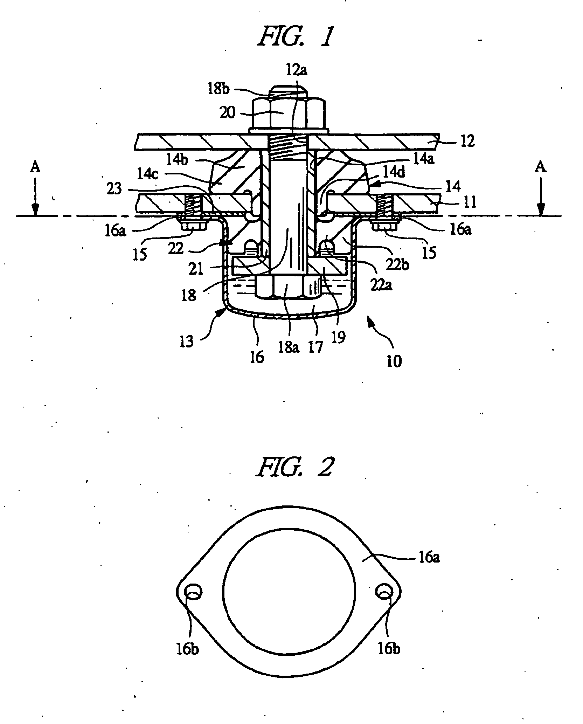

Hereinafter, an embodiment of the present invention will be described in detail with reference to FIGs. 1 to 4.

As shown in FIG. 1, a liquid sealed mount 10 is provided between a vehicle body frame (other-side member) 11 of a vehicle body (not shown) having an endless track, such as a crawler as a vehicle, in a construction machine such as a power shovel, and a bottom-wall side member (one-side member) 12 of a cab (not shown) that is disposed above the vehicle body frame 11 in FIG. 1 and in which a driver rides. The liquid sealed mount 10 absorbs and damps inter-vibration of the vehicle body frame 11 and the bottom-wall side member 12. The liquid sealed mount 10 comprises a vibration damping body (damping unit) 13 having a vibration damping function, and a ring-shaped elastic body (elastic body) 14 having a vibration absorbing function and made of rubber.

The vibration damping body 13 includes a case 16 attached to the vehicle body frame 11 via fixing bolts 15. The case 16 is formed into a bottomed, cylindrical cup shape by pressurizing a plate-like steel sheet using a pressurizing means such as press working. Integrally with an opening-end portion side of the case 16, an annular flange portion 16a extending radially outwardly is formed. Bolt through holes 16b through which the fixing bolts 15 penetrate are provided at two positions in the annular flange portion 16a as shown in FIG. 2.

Viscous fluid 17 made of a viscous material such as silicone oil is sealed inside the case 16 (housing chamber), and a thick damping plate 19 having predetermined thickness and fixed to a side of a bolt-head 18a (other end) of a bolt (stud) 18 is incorporated so as to be immersed in the viscous fluid 17.

A sleeve (stud) 21, which has approximately the same inner circumferential diameter as an outer circumferential diameter of the bolt 18 and to which the bolt 18 is press-fitted and fixed, is provided between the bolt-head 18a of the bolt 18 and a nut 20 that is screw-connected to a male thread portion 18b formed on the bolt 18. An inner circumferential side of a soft-rubber seal member 22 easy to be deformed is fixed to a lower end side of the sleeve 21 in FIG. 1 by an adhesion means such as vulcanization adhesion.

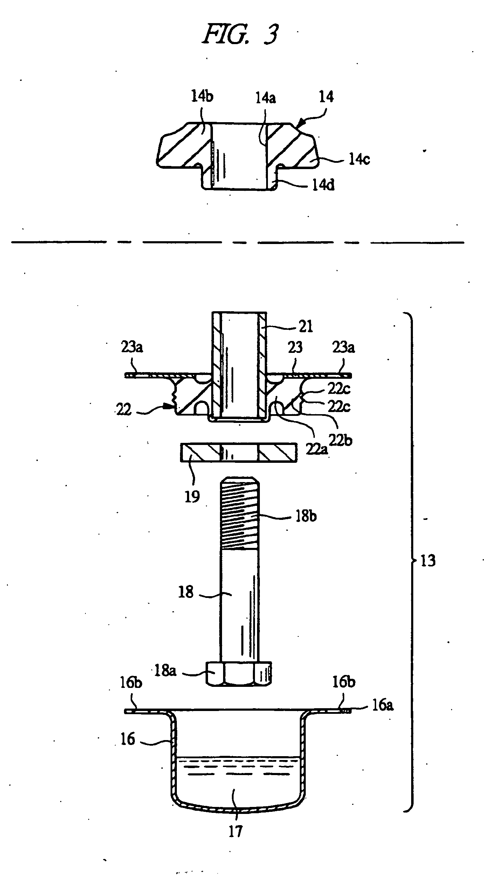

The seal member 22 is fixed to the opening-end portion side of the case 16, and partitions/forms an inside of the case 16. A thick seal portion 22b is formed integrally with the seal member 22 from an inner circumferential side of the seal member 22 via a thin seal portion 22a. As shown in FIG. 3, on an outer circumferential side of the thick seal portion 22b, two annular lip seal portions 22c each extending along a circumferential direction of the thick seal portion 22b are formed integrally with the thick seal portion 22b. Further, a plate member 23 is fixed to a top surface of the thick seal portion 22b of the seal member 22 in FIG. 3 by an adhesion means such as vulcanization adhesion. An outer circumference of the plate member 23 has approximately the same shape as that of the annular flange portion 16a of the case 16 shown in FIG. 2. Bolts 15, pass through holes 23a which are formed in the plate member 23 similarly to the annular flange portion 16a. An inner circumference of the plate member 23 is formed to have approximately the same diameter size as that of a boundary portion between the thin seal portion 22a and the thick seal portion 22b of the seal member 22.

Here, the vibration damping body 13 is obtained by assembling the case 16, the viscous fluid 17, the bolt 18, the damping plate 19, the sleeve 21, and the seal member 22, that is, is constituted by their assembly.

The ring-shaped elastic body 14 made of rubber is incorporated between the vehicle body frame 11 and the bottom-wall side member 12, and plays roles of supporting loads from the vehicle body frame 11 and the bottom-wall side member 12, respectively, as well as absorbing the inter-vibration of the vehicle body frame 11 and the bottom-wall side member 12.

A through hole 14a penetrating in the axial direction is formed in the center portion of the ring-shaped elastic body 14, and the sleeve 21 penetrates on an inner circumferential side of the through hole 14a via a slight clearance. A thin portion 14c whose thickness is smaller than that of the thick portion 14b on the inner circumferential side of the ring-shaped elastic body 14 is formed on a radial and outer-circumferential side of the ring-shaped elastic body 14. The thin portion 14c is formed so as to be gradually thinner toward a radial and outward side of the ring-shaped elastic body 14.

Further, a cylindrical elastic body 14d as a second elastic body is formed integrally with the thick portion 14b on the inner circumferential side of the ring-shaped elastic body 14. The cylindrical elastic body 14d is interposed so as to be inserted into a clearance between the inner circumferential side of the hole 11a provided in the vehicle body frame 11 and the outer circumference of the sleeve 21. The dimension in the axial direction of the cylindrical elastic body 14d is set to have approximately the same thickness dimension as that of the vehicle body frame 11.

Incidentally, a hole 12a is provided in the bottom-wall side member 12, and an inner diameter dimension of the hole 12a is set slightly larger than the diameter dimension of the outer circumference of the bolt 18 and slightly smaller than the diameter dimension of the outer circumference of the sleeve 21. For this reason, the bolt 18 and the sleeve 21, serving as a stud constituting the liquid sealed mount 10, are fixed to the bottom-wall side member 12 via the nut 20. ,

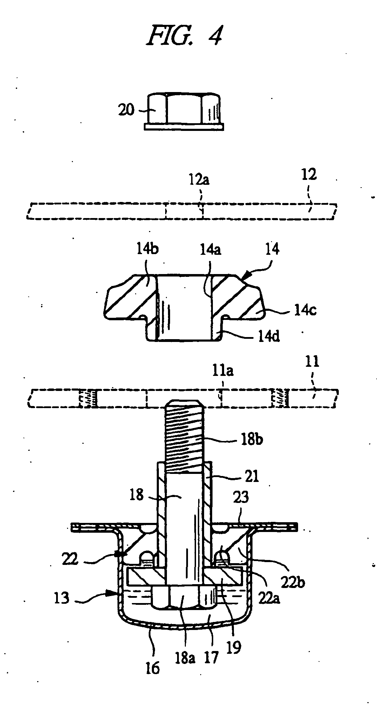

Next, a method of assembling the liquid sealed mount 10 having a structure as described above, according to the present embodiment, and a method of incorporating the liquid sealed mount 10 between the vehicle body frame 11 and the bottom-wall side member 12 will be described with reference to FIGs. 3 and 4.

First, an opening end portion of the case 16 is directed upward, and a predetermined amount of viscous fluid 17 is injected into the inside of the case 16. Next, the damping plate 19 is mounted to the bolt 18 from a side of the male threaded portion 18b of the bolt 18, followed by mounting the sleeve 21 to which the seal member 22 is adhered. Then, the outer circumferential side of the seal member 22 is fitted into the opening-end portion side of the case 16. At this time, the lip seal portions 22c provided to the outer circumference of the thick seal portion 22b are pressed on and contact with an inner circumferential wall of the case 16 while being elastically deformed radially inwardly, so that the seal member 22, does not easily come off the case 16 nor does the viscous fluid 17 in the case 16 leak to the outside. In this manner, the assembly of the vibration damping body 13 as an assembly shown in FIG. 4 is completed (a first step) .

Next, when the vibration damping body 13 is attached to the vehicle body frame 11, the vibration damping body 13 is opposed from below the hole 11a provided in the vehicle body frame 11 in FIG. 4 so as to allow the bolt 18 to penetrate the hole 11a, and then the bolt 18 is caused to penetrate the hole 11a. When the plate member 23 of the vibration damping body 13 contacts with the back surface of the vehicle body frame 11 in FIG. 4, the fixing bolts 15 are screw-connected to the vehicle body frame 11 via the annular flange portion 16a of the case 16, thereby attaching the vibration damping body 13 to the back surface of the vehicle body frame 11.

The through hole 14a in the ring-shaped elastic body 14 is adapted so as to oppose the bolt 18 of the vibration damping body 13 from above the vehicle body frame 11 in FIG. 4, and then the ring-shaped elastic body 14 is mounted to the sleeve 21 located on the outer circumferential side of the bolt 18. Therefore, the cylindrical elastic body 14d of the ring-shaped elastic body 14 is interposed in the clearance between the inner circumferential surface of the hole 11a provided in the vehicle body frame 11 and the outer circumferential surface of the sleeve 21, the ring-shaped elastic body 14 is placed on the top surface of the vehicle body frame 11, and the mounting of the ring-shaped elastic body 14 is completed.

Thereafter, the male threaded portion 18b of the bolt 18 is caused to penetrate the hole 12a provided in the bottom-wall side member 12, and the bottom-wall side member 12 is caused to contact with a top end surface of the sleeve 21 in FIG. 4. Then, by screw-connecting the nut 20 to the male threaded portion 18b of the bolt 18, attachment of the bolt 18 to the bottom-wall side member 12 is completed. In the manner described above, the liquid sealed mount 10 comprising the vibration damping body 13 and the ring-shaped elastic body 14 can be incorporated between the vehicle body frame 11 and the bottom-wall side member 12 (a second step). Here, the flange member according to the present invention constitutes part of the vehicle body frame (other-side member) 11, that is, a structure in which the vehicle body frame 11 serves as the flange member is adopted in the present embodiment.

Here, in a state where the liquid sealed mount 10 is assembled between the vehicle body frame 11 and the bottom-wall side member 12, that is, in a state where the load of the cab is supported by statically supporting the bottom-wall side member 12 using the vehicle body frame 11 (assembling state), the ring-shaped elastic body 14 and the seal member 22 can be also pre-compressed by deforming up to their predetermined amounts for compression. In order to pre-compress the ring-shaped elastic body 14 and the seal member 22, the ring-shaped elastic body 14 and the seal member 22 may be sandwiched between the bottom-wall side member 12 and the damping plate 19 by using the sleeve 21 whose dimension in the axial direction (vertical dimension in Figure) is shortened by a predetermined amount. By preparing the sleeve 21 different in dimension in the axial direction, compression deformation amounts of the ring-shaped elastic body 14 and the seal member 22 can be adjusted, whereby the liquid sealed mount 10 having various characteristics can be obtained.

Incidentally, in the above-described embodiment, the seal member 22 is fixed By being fitted into the opening-end portion side of the case 16. However, the fixing manner is not limited to this, and such fixation may be made by adhesion and the like.

Next, an operation of the present embodiment having a structure as described above will be described. In FIG. 1, when the load transmitted from the bottom-wall side member 12 and the vehicle body frame 11 to the liquid sealed mount 10 is an ordinary load, that is, when the load is a load in a use environment where there is no fear that a construction machine topples over, the thick portion 14b of the ring-shaped elastic body 14 constituting the liquid sealed mount 10 is elastically deformed in the compression direction in a deformation range where elastic deformation occurs, and the ring-shaped elastic body 14 absorbs vibration flexibly using a small spring constant. At the same time, the damping plate 19 moves in the viscous fluid 17 in the vertical direction via the sleeve 21 in FIG. 1, and the viscous fluid 17 flows in the case 16 owing to the movement of the damping plate 19. Therefore, the vibration can be damped by flow resistance of the viscous fluid 17. Here, the seal member 22 is made of soft rubber easy to be deformed and has the thin seal portion 22a, so that it does not fall away from the sleeve 21 and the plate member 23.

On the other hand, when the load transmitted from the bottom-wall side member 12 and the vehicle body frame 11 to the liquid sealed mount 10 is an excessive load, that is, when the load is a load (excessive load) indicated when an unexpected load occurs at the cab by the construction machine toppling over, the thick portion 14b of the ring-shaped elastic body 14 constituting the liquid sealed mount 10 is beyond an ordinary deformation range to cause the entire ring-shaped elastic body 14 to highly elastically deform in the compression direction, and supports the bottom-wall side member 12 with a large spring constant, thereby preventing a fall (tilt) of the bottom-wall side member 12 a certain level or more with respect to the vehicle body frame 11. Even though a load in a direction in which the bottom-wall side member 12 is largely separate from the vehicle body frame 11, that is, a tensile-directional load or a pulling-out load in a tensile or parting direction is applied, since the seal member 22 has the thick seal portion 22b, the thick seal portion 22b functions as a stopper unit in the present invention, thereby making it possible to prevent the bottom-wall side member 12 from being separated from the vehicle body frame 11 a certain level or more by the damping plate 19 contacting with the thick seal portion 22b. Here, even when the excessive load in the compression direction and the tensile-directional load are transmitted to the liquid sealed mount 10, the vehicle body frame 11 receives the loads in both directions, so that there is no deformation and breakage of the case 16. Further, since the damping plate 19 is formed thick, it is not deformed even when receiving the tensile-directional load.

Furthermore, when the directions of the loads from the bottom-wall side member 12 and the vehicle body frame 11 are against the horizontal direction and the twisting direction, the loads are received by the cylindrical elastic body 14d interposed in the clearance between the inner circumferential surface of the hole 11a provided in the vehicle body frame 11 and the outer circumferential surface of the sleeve 21. Therefore, vibration involved by movements of the bottom-wall side member 12 and the vehicle body frame 11 in the relatively horizontal and twisting directions can be absorbed.

For example, when high-frequency micro-vibration generated by the engine and the like is intended to be able to be effectively absorbed, the ring-shaped elastic body 14 and the seal member 22 may be preferably pre-compressed in a state where the liquid sealed mount 10 is assembled as described above. In this case, when high-frequency micro-vibration is transmitted to the liquid sealed mount 10, the ring-shaped elastic body 14 and the seal member 22 are elastically deformed in the range of the pre-compression in which a dynamic spring constant is suppressed to a lower level, and a contact state of the damping plate 19 with the seal member 22 is maintained. Accordingly, no clearance is generated between the damping plate 19 and the seal member 22, and the viscous fluid 17 hardly flows, so that generation of damping caused by the flow resistance of the viscous fluid 17 can be suppressed. Thus, the transmission of the high-frequency micro-vibration to the bottom-wall side member 12 is controlled, and the liquid sealed mount 10 can exert excellent vibration insulation performance with respect to the bottom-wall side member 12. When large amplitude vibration at a predetermined level or more is inputted to the liquid sealed mount 10, the damping plate 19 is separate from the seal member 22, and flow of the damping fluid 17 into the top surface of the damping plate 19 is generated. Thus, large damping occurs, and the large amplitude vibration can be damped in a short time.

As described in the foregoing, according to the liquid sealed mount 10 in the present embodiment, the liquid sealed mount 10 has such a structure as to attach the vibration damping body 13 to the vehicle body frame 11, wherein the loads from the vehicle body frame 11 and the bottom-wall side member 12 are supported, and the ring-shaped elastic body 14 that absorbs vibration is incorporated between the vehicle body frame 11 and the bottom-wall side member 12. Therefore, the vehicle body frame 11 receives the loads from the vehicle body frame 11 and the bottom-wall side member 12, and the excessive loads are not exerted on the case 16, so that it is possible to prevent a leakage of the viscous fluid 17 to the outside when the case 16 deforms or any cracks occur in the case 16. Further, since there is no need to make the strength of the components such as the case 16 and the bolt 18 higher, reduction in weight and costs as well as downsizing can be achieved, and the liquid sealed mount 10 can be easily applied to small construction machines. Further, since the ring-shaped elastic body 14 is provided between the vehicle body frame 11 and the bottom-wall side member 12 and the loads from the vehicle body frame 11 and the bottom-wall side member 12 are applied in the compression direction of the ring-shaped elastic body 14, no load in the shear direction is applied to the ring-shaped elastic body 14, so that even if an excessive load is applied to the ring-shaped elastic body 14, its crack can be prevented from occurring. Furthermore, the liquid sealed mount 10 can have a structure in which the vibration absorbing function due to deformation of the ring-shaped elastic body 14 and the vibration damping function involved by movement of the damping plate 17 in the viscous fluid 17 are provided simultaneously, thereby making it possible to secure the sufficient damping performance.

Still further, the ring-shaped elastic body 14 receives the load in the compression direction, and the thick seal portion 22b of the seal member 22 receives the tensile-directional load, so that the loads in both the compression direction and in the tensile direction can be received, whereby an excessive tilt at or above a certain level of the bottom-wall side member 12 in respect of the vehicle body frame 11 can be suppressed.

Since the rigidity of the vehicle body frame 11 as a flange member is higher than that of the case 16, the vehicle body frame 11 is not deformed easily even when the excessive load is applied. Further, since the vehicle body frame 11 receives the load in the compression direction via the ring-shaped elastic body 14 as well as the tensile-directional load via the thick seal portion 22b of the seal member 22, the vehicle body frame 11 receives the loads in both directions, so that the excessive load is not applied to the case 16. Furthermore, since the flange member is part of the vehicle body frame, the vehicle body frame 11 can be used as a strength member of the liquid sealed mount 10, so that the number of parts that constitute the liquid sealed mount 10 is reduced, whereby the reduction of the weight and the downsizing of the liquid sealed mount 10 can be achieved.

Still further, the cylindrical elastic body 14d as a second elastic body is disposed between the inner circumferential surface of the hole 11a in the vehicle body frame 11 and the outer circumferential surface of the sleeve 21, so that the cylindrical elastic body 14d receives the loads caused by the movements in the horizontal and twisting directions between the bottom-wall side member 12 and the vehicle body frame 11, and that a vibration absorbing function can be added also to the movements in the horizontal and twisting directions between the bottom-wall side member 12 and the vehicle body frame 11.

Still further, since the bolt 18 has the sleeve 21 on its outer circumferential surface, the seal member 22 can be fixed to the sleeve 21 in advance, so that assembling workability of the liquid sealed mount 10 can be made easy.

Still further, by pre-compressing the ring-shaped elastic body 14 and the seal member 22 in a state where the liquid sealed mount 10 is assembled, high-frequency micro-vibration can be effectively absorbed by the ring-shaped elastic body 14 and the seal member 22 which have been pre-compressed. Therefore, transmission of the high-frequency micro-vibration to the bottom-wall side member 12 can be effectively isolated.

Still further, the one-side member may is used as the bottom-wall side member 12 of the cab in the construction machine, and the other-side member is used as the vehicle body frame 11 in the construction machine, so that the liquid sealed mount 10 can be applied to industrial machines such as construction machines, and the vehicle body frame 11 in the industrial machines can be used as the strength member.

Still further, the liquid sealed mount 10 can be assembled to the bottom-wall side member 12 and the vehicle body frame 11 via: a first step of assembling the vibration damping body 13 constituting the liquid sealed mount 10; and a second step of fixing the vibration damping body 13 to the vehicle body frame 11 to assemble the ring-shaped elastic body 14, which constitutes the liquid-sealed mount 10, between the bottom-wall side member 12 and the vehicle body frame 11. Thus, since the vibration damping body 13 and the ring-shaped elastic body 14 are independently assembled, modification of the ring-shaped elastic body 14 different in spring constant and easy replacement of the vibration damping body 13 can be achieved according to, for example, magnitudes of the loads from the bottom-wall side member 12, preference of the drivers, and the like, so that the liquid sealed mount 10 can be improved regarding its tuning and maintenance.

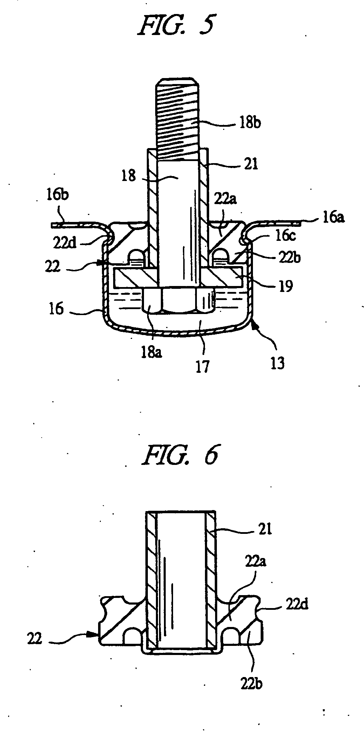

Next, another embodiment of the present invention will be described with reference to FIGs. 5 and 6. Note that members having functions common to those in the above-described embodiment are denoted by the same reference numerals, and members other than such members will be described in detail below.

An annular convex portion 16c projecting inwardly in a direction in which the inner diameter of the case 16 is made smaller is formed, by a pressurizing means such as press working, on a base end side of the annular flange portion 16a formed on an opening end side of the case 16. Moreover, in the seal member 22, an annular concave portion 22d into which the annular convex portion 16c is fitted is formed opposite to the annular convex portion 16c of the case 16 and on the outer circumferential side of the thick seal portion 22b of the seal member 22. Note that the plate member 23 provided in the above-described embodiment shown in FIGs. 1 to 4 is not used in the present embodiment.

In the another embodiment having a structure as described above, operations and effects similar to those in the embodiment shown in FIGs. 1 to 4 can be obtained. In addition to this, in the another embodiment shown in FIGs. 5 and 6, a tensile or parting strength of the seal member 22 from the case 16 can be further improved because the annular convex portion 16c formed at the case 16 and the annular concave portion 22d formed at the seal member 22 are connected by concave-convex engagement. Also, since the plate member is not used, the weight of the liquid sealed mount can be reduced, and the number of its parts is decreased, which results in a reduction in costs.

Incidentally, the present invention is not limited to the above-described embodiments, and may be modified if thereby remaining within the scope of the invention as defined by the appended claims. For example, although a rubber-made elastic body is used as the elastic body in the present embodiments described above, the present invention is not limited to this, and a coil spring may be provided so as to be wound around a circumference of the stud, instead of the rubber-made elastic body.

In the embodiments described above, a structure in which the flange member and the other-side member are the same, that is, a structure in which the vehicle body frame 11 serves as both of the flange member and the other-side member has been shown, but the present invention is not limited to this and may have a structure in which the vehicle body frame 11 and the flange member are individually different members.

Further, in the above-described embodiments, a structure in which the stud in the present invention is composed of the bolt 18 and the sleeve 21 has been shown, but the present invention is not limited to this. As long as a member as the stud connects the one-side member and the damping plate, a component/shape of such a member is not limited to those described above.

Also, the embodiments described above have shown only a structure in which the ring-shaped elastic body 14 constituting part of the liquid sealed mount 10 is incorporated between the vehicle body frame 11 and the bottom-wall side member 12, but the present invention, according to magnitudes of the loads from the bottom-wall side member 12, preference of the drivers, and the like, encompasses another independent elastic body (a rubber-made elastic body or coil spring) which, as defined in claim 1, is incorporated so as to be arranged to the ring-shaped-elastic body 14, whereby its spring constant may be adjusted.

Further, the above-described embodiments have shown that the thin portion 14c of the ring-shaped elastic body 14 is provided on the outer circumferential side of the ring-shaped elastic body 14, but the present invention is not limited to this. A thin portion may be provided on the inner circumferential side of the ring-shaped elastic body 14 or at an intermediate portion between the outer circumferential side and the inner circumferential side of the ring-shaped elastic body 14. In short, the thin portion may be provided so as to make a contact area of the ring-shaped elastic body 14 larger, that is, so as to make the spring constant of the ring-shaped elastic body 14 larger according to proximity of the vehicle body frame 11 and the bottom-wall side member 12.

Furthermore, the embodiments described above have shown that the ring-shaped elastic body 14 and the seal member 22 are each made of a rubber material, but the present invention is not limited to this. They may be each made of an elastomer material or metal spring instead of a rubber material. However, a rubber material and an elastomer material are particularly preferred because these materials have internal damping and are light in weight.

### INDUSTRIAL APPLICABILITY

The liquid sealed mount is mounted between the vehicle body frame and the cab (cabin) in the construction machine such as a power shovel, and is used to absorb the vibration transmitted to the cab.

## Claims

1. A liquid sealed mount provided between a vehicle body frame (11) and a bottom-wall side member (12) of a cab disposed above the vehicle body frame, and absorbing and damping vibration inputted to at least one of the vehicle body frame and the bottom-wall side member of the cab, comprising:
a stud (18) which is inserted into a hole (11a) provided in the vehicle body frame and whose one end is attached to the bottom-wall side member;
a case (16) attached to the vehicle body frame, an other end of the stud being incorporated into the case;
a flexible seal member (22) forming a housing chamber for sealing viscous fluid (17) in the case by fixing an outer circumferential side of the seal member to an opening-end portion side of the case and fixing an inner circumferential side of the seal member to an outer circumferential surface of the stud; and
a damping plate (19) fixed to an other end of the stud and disposed movably in the viscous fluid, **characterized by**
an elastic body (14) incorporated between the vehicle body frame and the bottom-wall side member,
wherein the case (16) is attached to a back surface of the vehicle body frame,
wherein the vehicle body frame supports a compression-directional load via the elastic body, and supports, via the flexible seal member, a tensile-directional load applied to the stud, and
wherein the vehicle body frame has an opposing face to the flexible seal member at a peripheral region which is opposite a side face of the flexible seal member on the opening-end portion side of the case and which is around the hole provided in the vehicle body frame,
the flexible seal member having a stopper unit (22b), on which the damper plate can abut when moving in a tensile direction, and
the tensile-directional load being supported via the stopper unit by the opposing face of the vehicle body frame.

2. The liquid sealed mount according to claim 1, wherein the vehicle body frame has rigidity higher than that of the case.

3. The liquid sealed mount according to claim 1, wherein a second elastic body (14d) is disposed between an inner circumferential surface of the hole in the vehicle body frame and the outer circumferential surface of the stud.

4. The liquid sealed mount according to claim 1, wherein the stud has a sleeve (21) on its outer circumferential surface.

5. The liquid sealed mount according to claim 1, wherein the elastic body and the flexible seal member are pre-compressed in their assembling state.

6. The liquid sealed mount according to claim 5, wherein the pre-compression is performed by compressing the elastic body and the flexible seal member toward the vehicle body frame by the bottom-wall side member and the damping plate.

7. The liquid sealed mount according to claim 1 or 2, wherein a plate member (23) is disposed between a top surface of the flexible seal member and the back face of the vehicle body frame opposing to the flexible seal member.

8. A method of assembling a liquid sealed mount provided between a vehicle body frame (11) and a bottom-wall side member (12) of a cab disposed above the vehicle body frame and absorbing and damping vibration inputted to at least one of the vehicle body frame and the bottom-wall side member of the cab, **characterized by** comprising:
a first step of fixing an inner circumferential surface of a flexible seal member (22) to an outer circumferential surface of a stud (18) by adhesion, fixing a damping plate (19) to the stud and causing the stud to be disposed in a case (16) so that the damping plate is immersed in viscous fluid (17), and fitting an outer circumferential side of the flexible seal member into an opening-end portion side of the case to form a housing chamber in the case; and
a second step of inserting the stud into a hole (11a) of the vehicle body frame and fixing the case to a back face of the vehicle body frame, and inserting a ring-shaped elastic body (14) into the stud to place it between the bottom-wall side member and the vehicle body frame and fixing the stud to the bottom-wall side member.

9. The method of assembling the liquid sealed mount according to claim 8, wherein the stud has a sleeve (21), to whose outer circumferential surface the flexible seal member is fixed, and a bolt inserted into the sleeve to be fixed by the damping plate, and fixed to the bottom-wall side member.

10. The method of assembling the liquid sealed mount according to claim 9, wherein the sleeve is set to shorten a predetermined amount with respect to the elastic body and the flexible seal member, and is pre-compressed by sandwiching the elastic body and the flexible seal member between the bottom-wall side member and the damping plate for compression deformation.

11. The method of assembling the liquid sealed mount according to claim 8 or 9, wherein the first step comprises of the sub-steps: disposing a plate member (23) on a top surface of the flexible seal member; fitting an outer circumferential side of the flexible seal member into an opening-end portion side of the case; and closing a top end surface of an opening of the case to form the housing chamber.

## Patentansprüche

1. Eine flüssigkeitsdichte Halterung, die zwischen einem Fahrzeugkarosserierahmen (11) und einem Element (12) an der Seite einer Bodenwand einer Kabine vorhanden ist, die oberhalb des Fahrzeugkarosserierahmens angeordnet ist, und die Schwingung absorbiert und dämpft, die in den Fahrzeugkarosserierahmen oder/und das Element an der Seite der Bodenwand der Kabine eingegeben wird, wobei sie umfasst:
einen Bolzen (18), der in ein Loch (11a) eingeführt ist, das in dem Fahrzeugkarosserierahmen vorhanden ist, und dessen eines Ende an dem Element an der Seite der Bodenwand angebracht ist;
eine Verkleidung (16), die an dem Fahrzeugkarosserierahmen angebracht ist, wobei ein anderes Ende des Bolzens in die Verkleidung integriert ist;
ein flexibles Dichtungselement (22), das eine Aufnahmekammer für dichtendes viskoses Fluid (17) in der Verkleidung bildet, wenn eine Außenumfangsseite des Dichtungselementes an einer Seite des offenen Endabschnitts des Gehäuses befestigt wird und eine Innenumfangsseite des Dichtungselementes an einer Außenumfangsseite des Bolzens befestigt wird; und
eine Dämpfplatte (19), die an einem anderen Ende des Bolzens befestigt und beweglich in dem viskosen Fluid angeordnet ist, **gekennzeichnet durch**:
einen elastischen Körper (14), der zwischen den Fahrzeugkarosserierahmen und das Element an der Seite der Bodenwand integriert ist,
wobei die Verkleidung (16) an einer Rückseite des Fahrzeugkarosserierahmens angebracht ist,
der Fahrzeugkarosserierahmen eine Druckrichtungs-Last über den elastischen Körper aufnimmt und eine Zugrichtungs-Last, die auf den Bolzen wirkt, über das flexible Dichtungselement aufnimmt, und
wobei der Fahrzeugkarosserierahmen eine dem flexiblen Dichtungselement gegenüberliegende Fläche an einem Randbereich aufweist, der einer Seitenfläche des flexiblen Dichtungselements an der Seite des offenen Endabschnitts der Verkleidung gegenüberliegt und sich um das Loch herum befindet, das in dem Fahrzeugkarosserierahmen vorhanden ist,
das flexible Dichtungselement eine Anschlageinheit (22b) aufweist, an der die Dämpfplatte anschlagen kann, wenn sie sich in einer Zugrichtung bewegt, und
die Zugrichtungs-Last über die Anschlageinheit von der gegenüberliegenden Fläche des Fahrzeugkarosserierahmens aufgenommen wird.

2. Eine flüssigkeitsdichte Halterung nach Anspruch 1, wobei der Fahrzeugkarosserierahmen eine Steifigkeit hat, die höher ist als die der Verkleidung.

3. Eine flüssigkeitsdichte Halterung nach Anspruch 1, wobei ein zweiter elastischer Körper (14d) zwischen einer Innenumfangsfläche des Lochs in dem Fahrzeugkarosserierahmen und der Außenumfangsfläche des Bolzens angeordnet ist.

4. Eine flüssigkeitsdichte Halterung nach Anspruch 1, wobei der Bolzen eine Hülse (21) an seiner Außenumfangsfläche aufweist.

5. Eine flüssigkeitsdichte Halterung nach Anspruch 1, wobei der elastische Körper und das flexible Dichtungselement in ihrem Zusammenbauzustand vorgepresst werden.

6. Eine flüssigkeitsdichte Halterung nach Anspruch 5, wobei das Vorpressen durchgeführt wird, indem der elastische Körper und das flexible Dichtungselement durch das Element an der Seite der Bodenwand und die Dämpfplatte auf den Fahrzeugkarosserierahmen zu gepresst werden.

7. Eine flüssigkeitsdichte Halterung nach Anspruch 1 oder 2, wobei ein Plattenelement (23) zwischen einer Oberseite des flexiblen Dichtungselementes und der Rückseite des Fahrzeugkarosserierahmens angeordnet ist, die dem flexiblen Dichtungselement gegenüberliegt.

8. Verfahren zum Zusammensetzen einer flüssigkeitsdichten Halterung, die zwischen einem Fahrzeugkarosserierahmen (11) und einem Element (12) an der Seite einer Bodenwand einer Kabine vorhanden ist, die oberhalb des Fahrzeugkarosserierahmens angeordnet ist, und die Schwingung absorbiert und dämpft, die in den Fahrzeugkarosserierahmen oder/und das Element an der Seite der Bodenwand der Kabine eingegeben wird, **dadurch gekennzeichnet, dass** es umfasst:
einen ersten Schritt des Befestigens einer Innenumfangsfläche eines flexiblen Dichtungselementes (22) an einer Außenumfangsfläche eines Bolzens (18) durch Kleben, des Befestigens einer Dämpfplatte (19) an dem Bolzen und des Anordnens des Bolzens in einer Verkleidung (16), so dass die Dämpfplatte in viskoses Fluid (17) eingetaucht wird, und des Einpassens einer Außenumfangsseite des flexiblen Dichtungselementes in eine Seite des offenen Endabschnitts der Verkleidung, um eine Aufnahmekammer in der Verkleidung auszubilden;
einen zweiten Schritt des Einführens des Bolzens in ein Loch (11a) des Fahrzeugkarosserierahmens und des Befestigens der Verkleidung an einer Rückseite des Fahrzeugkarosserierahmens sowie des Aufsetzens eines ringförmigen elastischen Körpers (14) auf den Bolzen, um ihn zwischen dem Element an der Seite der Bodenwand und dem Fahrzeugkarosserierahmen zu positionieren, und des Befestigens des Bolzens an dem Element an der Seite der Bodenwand.

9. Verfahren zum Zusammensetzen der flüssigkeitsdichten Halterung nach Anspruch 8, wobei der Bolzen eine Hülse (21) aufweist, an deren Außenumfangsfläche die flexible Dichtungseinrichtung befestigt ist, sowie einen Stift, der in die Hülse eingeführt wird, um ihn mit der Dämpfungsplatte zu befestigen, und der an dem Element an der Seite der Bodenwand befestigt wird.

10. Verfahren zum Zusammensetzen der flüssigkeitsdichten Halterung nach Anspruch 9, wobei die Hülse so eingerichtet ist, dass sie sich in Bezug auf den elastischen Körper und das flexible Dichtungselement um ein vorgegebenes Maß verkürzt, und vorgepresst wird, indem der elastische Körper und das flexible Dichtungselement zwischen dem Element an der Seite der Bodenwand und der Dämpfplatte zur Druckverformung eingeschlossen werden.

11. Verfahren zum Zusammensetzen der flüssigkeitsdichten Halterung nach Anspruch 8 oder 9, wobei der erste Schritt die folgenden Teilschritte umfasst:
Anordnen eines Plattenelementes (23) an einer oberen Fläche des flexiblen Dichtungselementes; Einpassen einer Außenumfangsseite des flexiblen Dichtungselementes in eine Seite des offenen Endabschnitts der Verkleidung; und Verschließen einer oberen Endfläche einer Öffnung der Verkleidung, um die Aufnahmekammer zu bilden.

## Revendications

1. Monture hermétique à liquide prévue entre un cadre de carrosserie de véhicule (11) et un élément latéral de paroi inférieure (12) d'une cabine disposée au-dessus du cadre de carrosserie de véhicule, et absorbant et amortissant les vibrations appliquées sur au moins un élément parmi le cadre de carrosserie de véhicule et l'élément latéral de paroi inférieure de la cabine, comprenant :
un goujon (18) qui est inséré dans un orifice (11a) prévu dans le cadre de carrosserie de véhicule et dont une extrémité est fixée à l'élément latéral de paroi inférieure ;
une enveloppe (16) fixée au cadre de carrosserie de véhicule, une autre extrémité du goujon étant incorporée dans l'enveloppe ;
un élément d'herméticité flexible (22) formant une chambre de logement pour enfermer hermétiquement un liquide visqueux (17) dans l'enveloppe en fixant un côté circonférentiel extérieur de l'élément d'herméticité à un côté d'une portion d'extrémité ouvert de l'enveloppe et en fixant un côté circonférentiel intérieur de l'élément d'herméticité à une surface circonférentielle extérieure du goujon ; et
une plaque d'amortissement (19) fixée à une autre extrémité du goujon et disposée de façon mobile dans le liquide visqueux, **caractérisée par**
un corps élastique (14) incorporé entre le cadre de carrosserie de véhicule et l'élément latéral de paroi inférieure,
dans laquelle l'enveloppe (16) est fixée à une surface arrière du cadre de carrosserie de véhicule,
dans laquelle le cadre de carrosserie de véhicule supporte une charge directionnelle de compression par l'intermédiaire du corps élastique, et supporte, par l'intermédiaire de l'élément d'herméticité flexible, une charge directionnelle de traction appliquée sur le goujon, et
dans laquelle le cadre de carrosserie de véhicule comporte une face opposée à l'élément d'herméticité flexible à une région périphérique qui est opposée à une face latérale de l'élément d'herméticité flexible du côté de la portion d'extrémité ouvert de l'enveloppe et qui est autour de l'orifice prévu dans le cadre de carrosserie de véhicule,
l'élément d'herméticité flexible comportant une unité d'arrêt (22b), sur laquelle la plaque d'amortissement peut prendre appui lorsqu'elle se déplace dans une direction de traction, et
la charge directionnelle de traction étant supportée par la face opposée du cadre de carrosserie de véhicule par l'intermédiaire de l'unité d'arrêt.

2. Monture hermétique à liquide selon la revendication 1, dans laquelle le cadre de carrosserie de véhicule possède une rigidité supérieure à celle de l'enveloppe.

3. Monture hermétique à liquide selon la revendication 1, dans laquelle un second corps élastique (14d) est disposé entre une surface circonférentielle intérieure de l'orifice dans le cadre de carrosserie de véhicule et la surface circonférentielle extérieure du goujon.

4. Monture hermétique à liquide selon la revendication 1, dans laquelle le goujon comporte un manchon (21) sur sa surface circonférentielle extérieure.

5. Monture hermétique à liquide selon la revendication 1, dans laquelle le corps élastique et l'élément d'herméticité flexible sont pré-comprimés dans leur état d'assemblage.

6. Monture hermétique à liquide selon la revendication 5, dans laquelle la pré-compression est réalisée en comprimant le corps élastique et l'élément d'herméticité flexible vers le cadre de carrosserie de véhicule par l'intermédiaire de l'élément latéral de paroi inférieure et la plaque d'amortissement.

7. Monture hermétique à liquide selon la revendication 1 ou 2, dans laquelle un élément plaque (23) est disposé entre une surface supérieure de l'élément d'herméticité flexible et la face arrière du cadre de carrosserie de véhicule opposée à l'élément d'herméticité flexible.

8. Procédé d'assemblage d'une monture hermétique à liquide prévue entre un cadre de carrosserie de véhicule (11) et un élément latéral de paroi inférieure (12) d'une cabine disposée au-dessus du cadre de carrosserie de véhicule et absorbant et amortissant les vibrations appliquées sur au moins un élément parmi le cadre de carrosserie de véhicule et l'élément latéral de paroi inférieure de la cabine, **caractérisé en ce qu'**il comprend :
une première étape de fixation d'une surface circonférentielle intérieure d'un élément d'herméticité flexible (22) à une surface circonférentielle extérieure d'un goujon (18) par adhésion, de fixation d'une plaque d'amortissement (19) au goujon et de la disposition du goujon dans une enveloppe (16) pour que la plaque d'amortissement soit immergée dans un liquide visqueux (17), et d'installer un côté circonférentiel extérieur de l'élément d'herméticité flexible du côté de la portion d'extrémité ouvert de l'enveloppe pour former une chambre de logement dans l'enveloppe ; et
une seconde étape d'insertion du goujon dans un orifice (11a) du cadre de carrosserie de véhicule et de fixation de l'enveloppe à une face arrière du cadre de carrosserie de véhicule, et d'insertion d'un corps élastique de forme annulaire (14) dans le goujon pour le placer entre l'élément latéral de paroi inférieure et le cadre de carrosserie de véhicule et de fixation du goujon à l'élément latéral de paroi inférieure.

9. Procédé d'assemblage de la monture hermétique à liquide selon la revendication 8, dans lequel le goujon comporte un manchon (21), à la surface circonférentielle extérieure duquel l'élément d'herméticité flexible est fixé, et un boulon inséré dans le manchon pour être fixé par la plaque d'amortissement, et fixé à l'élément latéral de paroi inférieure.

10. Procédé d'assemblage de la monture hermétique à liquide selon la revendication 9, dans lequel le manchon est placé pour raccourcir une quantité prédéterminée par rapport au corps élastique et à l'élément d'herméticité flexible, et est pré-comprimé en coinçant le corps élastique et l'élément d'herméticité flexible entre l'élément latéral de paroi inférieure et la plaque d'amortissement pour une déformation par compression.

11. Procédé d'assemblage de la monture hermétique à liquide selon la revendication 8 ou 9, dans lequel la première étape comprend les sous-étapes suivantes :
disposer un élément plaque (23) sur une surface supérieure de l'élément d'herméticité flexible ;
installer un côté circonférentiel extérieur de l'élément d'herméticité flexible du côté de la portion d'extrémité ouvert de l'enveloppe ; et fermer une surface d'extrémité supérieure d'une ouverture de l'enveloppe pour former la chambre de logement.
